# EUROPEAN PATENT APPLICATION

(11) **EP 1 209 786 A1**
(43) Date of publication of application: **29.05.2002**
(21) Application number: 01127831.4
(22) Date of filing: 22.11.2001
(51) Int. Cl.: H02G 3/18

(54) **Elevated floor panel with a cable outlet**

(30) Priority: 22.11.2000 LU 90680
(71) Applicant: Uniflair International, 1660 Luxembourg (LU)
(72) Inventor: Isaac, Eric Peter, 5335 Moutfort (LU)
(74) Representative: Schmitt, Armand

(57) **Abstract**

An elevated floor panel (10) with a cable outlet (12), wherein at least one brush (38, 40) is arranged in the cable outlet (12) so that its bristles obturate the latter, while allowing cables (16) to be passed between the bristles.

## Description

The present invention relates to an elevated floor panel with a cable outlet.

Elevated floors are commonly used in commercial and office buildings, where substantial numbers of cables, pipes or ducts are required and where it is desirable to maintain accessibility of the latter for ease of installation, change or removal. An elevated floor assembly basically consists of floor panels supported above the base floor by pedestals. The pedestals are normally located so as to provide support at panel corners. The pedestals may be supplemented by horizontal stringer members, which form a grid to provide support along the panel sides. Cables, pipes or even air conditioning services are thus installed between the base floor and the elevated floor and are easily accessible by removing floor panels where needed. In order to pass cables from the space between the base floor and the elevated floor through the floor panels into the room, some of the floor panels have got a cable outlet arranged therein. Such cable outlets are generally an opening cut into the floor panel. Such an opening will however also allow air circulation between the areas above and below the floor panels. Furthermore, objects may fall though such a cable outlet into the plenum between the base floor and the elevated floor.

The object of the present invention is to provide a floor panel for an elevated floor having a cable outlet therein, offering good protection against air circulation but being very flexible in the amount and diameter of cables used. Such a floor panel is defined in claim 1.

The present invention provides an elevated floor panel with a cable outlet, wherein at least one brush is arranged in the cable outlet so that its bristles obturate the latter, while allowing cables to be passed between the bristles. The bristles obturate the cable outlet so as to prevent air circulation between the areas above and below the floor panels. They also prevent smaller objects from entering the plenum. At the same time, the bristles however allow cables to be passed through the cable outlet. As cables are added or removed, the bristles rearrange themselves so as to obturate the cable outlet.

According to another embodiment, two brushes are arranged in the cable outlet opposite to each other so that their bristles interpenetrate along a centerline of the outlet. Any cables passing through the cable outlet will then align on the centerline. Only the ends of the bristles will be displaced, thus creating the smallest possible opening in the cable outlet. The bristles of the two brushes advantageously rise towards the centerline, so as to force the cables passing through the cable outlet to align on the centerline.

The brushes are preferably mounted on a frame comprising a horizontal flange resting on an upper surface of the panel and a vertical flange extending from the upper surface down into the cable outlet, the brush, resp. brushes, being mounted on the vertical flange of the frame. The frame provides excellent support for the brush, resp. brushes, and can be easily mounted in the cable outlet.

The vertical flange advantageously has at least the same height as the thickness of the elevated floor panel. This does not only ensure that the whole edge of the cable outlet is protected, but it also protects the cable from being damaged, especially by sharp metal edges on the lower surface of the panel, if the latter comprises a metallic sheet for stability purposes. The vertical flange can also comprise a rounded border so as to protect the cable from being damaged by sharp edges on the edge of the vertical flange.

The horizontal flange can have a rounded upper surface. This would not only be for aesthetic purposes, but it also prevents objects from being pushed from the upper surface of the panel onto the brushes.

The cable outlet advantageously opens into a side of the elevated floor panel. This allows the latter to be removed, e.g. for maintenance work in the plenum, without first having to unplug the cables running through the cable outlet.

The present invention will be more apparent from the following description of a not limiting embodiment with reference to the attached drawings, wherein
- Fig.1: is a perspective view of an elevated floor panel according to the invention, and
- Fig.2: is a perspective view of an elevated floor panel and a frame.

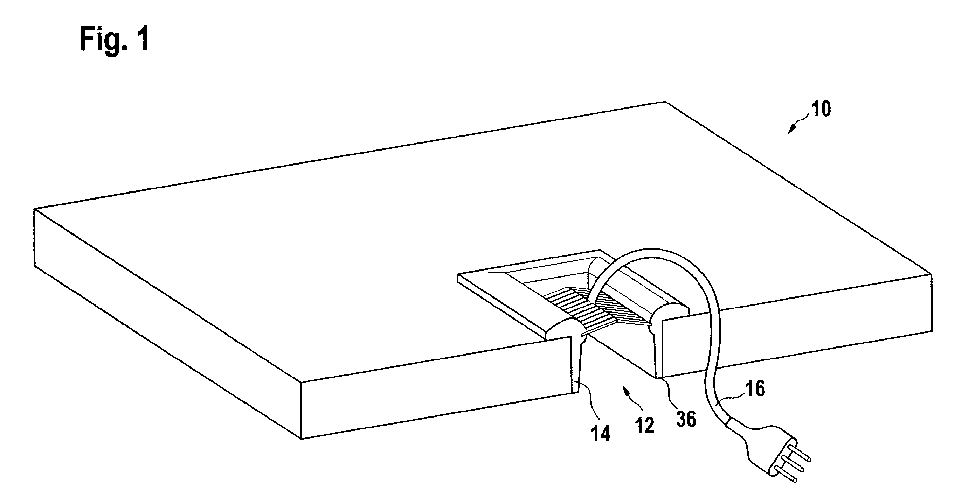

Fig.1 shows an elevated floor panel 10 with a cable outlet 12 having a frame 14 mounted therein. In this embodiment, the cable outlet 12 opens into a side of the panel 10. This allows the panel 10 to be removed, e.g. for maintenance work in the plenum, without having to unplug cables 16 passing through the cable outlet 12.

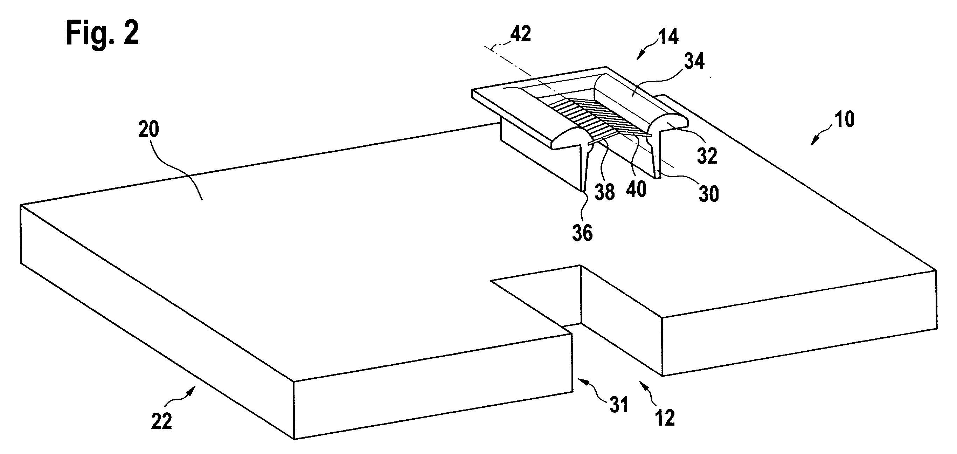

Fig.2 shows the same elevated floor panel 10 and its frame 14 before it is mounted in the panel 10. The floor panel 10 has an upper surface 20 and a lower surface 22 and has a rectangular cable outlet 12 arranged therein. The frame 14 has a vertical flange 30 lining the edge 31 of the cable outlet 12 and a horizontal flange 32 resting on the upper surface 20 of the panel 10. The vertical flange 30 and the horizontal flange 32 are made in one piece, preferably out of rigid plastic material or metal. The horizontal flange 32 has a rounded upper surface 34. As can best be seen on Fig.1, the vertical flange 30 has a height, which corresponds to the thickness of the panel 10, so that, when mounted, a lower border 36 of the vertical flange 30 reaches the lower surface 22 of the panel 10. The lower border 36 is rounded, so that a cable passing through the cable outlet 12 cannot be damaged by sharp edges on the vertical flange 30.

The frame 14 has a pair of brushes 38, 40 mounted thereon, the bristles of which obturate the cable outlet 12. The brushes 38, 40 are mounted on two parallel portions of the vertical flange 30 and face each other. Their bristles interpenetrate along a centerline 42 of the cable outlet 12. The centerline 42 is in a slightly elevated position, so that the bristles have to rise towards the centerline 42. The bristles obturate the cable outlet 12, thereby preventing dust or smaller objects from entering the plenum. At the same time, the bristles allow cables to be passed through the cable outlet 12. As cables 16 are added or removed, the bristles rearrange themselves so as to obturate the cable outlet 12.

## Claims

1. An elevated floor panel (10) with a cable outlet (12) **characterized by** at least one brush (38, 40) arranged in said cable outlet (12) so that its bristles obturate the latter, while allowing cables (16) to be passed between said bristles.

2. The elevated floor panel (10) as claimed in claim 1, **characterized by** two brushes (38, 40) arranged opposite each other in said cable outlet (12) so that their bristles interpenetrate along a centerline (42) of said cable outlet (12).

3. The elevated floor panel (10) as claimed in claim 2, **characterized in that** said bristles of said two brushes (38, 40) rise towards said centerline (42).

4. The elevated floor panel (10) according to any one of claims 1 to 3, **characterized by** a frame (14) comprising:
a horizontal flange (32) resting on an upper surface (20) of said panel (10), and
a vertical flange (30) extending from said upper surface (20) down into said cable outlet (12),
wherein said brushes (38, 40) are mounted on said vertical flange (30) of said frame (14).

5. The elevated floor panel (10) according to claim 4, wherein said vertical flange (30) has at least the same height as the thickness of said elevated floor panel (10).

6. The elevated floor panel (10) according to claim 5, wherein said vertical flange (30) has a rounded border (36).

7. The elevated floor panel (10) according to any one of claims 4 to 6, wherein said horizontal flange (32) has a rounded upper surface (34).

8. The elevated floor panel (10) according to any one of the previous claims,
wherein said cable outlet (12) opens into a side of said elevated floor panel (10).
